# EUROPÄISCHE PATENTANMELDUNG

(11) **EP 3 797 899 A1**
(43) Veröffentlichungstag der Anmeldung: **31.03.2021**
(21) Anmeldenummer: 19199999.4
(22) Anmeldetag: 27.09.2019
(51) Int. Cl.: B22D 11/128, B21B 39/00, B22D 11/20, B65G 39/00, B65G 43/02, G01P 3/64, G01S 13/87

(54) **VORRICHTUNG UND VERFAHREN ZUM ERKENNEN VON EINER BEWEGUNG EINES KÖRPERS IN EINER INDUSTRIEANLAGE**

(71) Anmelder: Primetals Technologies Austria GmbH, 4031 Linz (AT)
(72) Erfinder: Rohrhofer, Andreas, 4020 Linz (AT); Fischer, Paul, 4040 Linz (AT); Hartl, Franz, 4720 Kallham (AT); Mayrhofer, Anna, 4722 Peuerbach (AT); Voglmayr, Bernhard, 4060 Leonding (AT)
(74) Vertreter: Metals@Linz

(57) **Zusammenfassung**

Die Erfindung betrifft das Gebiet von Anlagen, bevorzugt von Industrieanlagen.

Die Aufgabe dieser Erfindung ist es, eine Vorrichtung, ein Verfahren, eine Verwendung der Vorrichtung und ein Computerprogramm zu schaffen, welche zumindest einen Körper (4) der Anlage, welcher eine Bewegung ausführt, einfach und kostengünstig zu überwachen.

Die Aufgabe wird gelöst durch eine Antenne (1) und einen Transponder (2), welcher von der Antenne (1) detektiert werden kann. Der Transponder (2) oder die Antenne (1) ist derart am Körper (4) angebracht, dass während der Bewegung des Körpers sich eine Position von Transponder (2) und Antenne (1) verändert. Eine Auswerteeinrichtung (3) kann die Bewegung des Körpers (4) anhand von durch die Antenne (1) empfangener Transpondersignale ermitteln.

## Beschreibung

### Gebiet der Technik

Die vorliegende Erfindung betrifft das Gebiet von Anlagen mit beweglichen Körpern.

Einerseits betrifft die Erfindung eine Vorrichtung zur Überwachung einer Anlage, bevorzugt eine Industrieanlage, wobei zumindest ein Körper der Anlage eine Bewegung, bevorzugt eine sich wiederholende Bewegung, besonders bevorzugt eine periodische Bewegung, ausführt.

Andrerseits betrifft die Erfindung ein Verfahren zur Überwachung einer Anlage, bevorzugt einer Industrieanlage, wobei zumindest ein Körper der Anlage eine Bewegung, bevorzugt eine sich wiederholende Bewegung, besonders bevorzugt eine periodische Bewegung ausführt.

Des Weiteren betrifft die Erfindung die Verwendung der Vorrichtung.

Des Weiteren umfasst die Erfindung auch ein Computerprogramm welches das Verfahren zur Überwachung von Anlagen ausführt.

### Stand der Technik

In Produktionsanlagen sind viele bewegliche Körper vorhanden, wobei nicht alle Bewegungen permanent überwacht werden. Es besteht bei manchen Anwendungen das Problem, dass eine Vielzahl von beweglichen Körpern vorhanden sind. Es ist aus Kostengründen oft nicht rentabel, alle diese beweglichen Körper ständig zu überwachen. Die beweglichen Körper werden oft nur sporadisch überprüft oder andere Hinweise - wie beispielsweise ein erhöhter Lärmpegel - deuten auf eine Fehlfunktion hin. Ein Beispiel, in welchem solche beweglichen Körper zu einer Vielzahl vorhanden sind, ist ein sogenanntes Förderband mit einem Fördergurt, welcher entlang einer Förderstrecke von Tragrollen gestützt wird. Es besteht nun das Problem, dass sichergestellt werden muss, dass sich diese Tragrollen während des Betriebes synchron zur Bandgeschwindigkeit drehen. Die Beförderung von Materialien aller Art und die langen Betriebszeiten dieser Förderbänder führen jedoch zu einem Verschleiß der Lager, welcher eine Drehbewegung der Tragrollen beeinträchtigen kann. Feststeckende oder schwergängige Tragrollen führen zu einer Relativbewegung zwischen Fördergurt und Rollen, was zu erhöhtem Verschleiß sowohl an den Rollen als auch am Fördergurt führt. Feststeckende oder schwergängige Tragrollen sind keine Seltenheit und können speziell bei langen Förderstrecken - wenn nicht rechtzeitig erkannt - zu ungeplanten Stillständen und weiters zu Produktionsausfällen führen. Eine manuelle Sichtinspektion der Fördereinrichtungen gestaltet sich sehr schwierig, da aus Sicherheitsgründen ein Großteil der Fördereinrichtungen geschlossen ausgeführt sind. Die geschlossene Ausführung verhindert den Blick auf die Tragrollen in vielen Fällen. Da Förderstrecken in der Regel sehr lange sind, stellt die manuelle Inspektion eine sehr zeitintensive Arbeit dar.

Eine Überwachung mit gängigen Sensoren - wie beispielsweise Drehzahlsensoren - ist nur über den Einsatz von übermäßig viel Hardware möglich, wodurch hohe Hardwarekosten und zusätzliche intensive Wartung entstehen. Dies wird in der Praxis selten angewendet, da vor allem eine Verkabelung der Hardware sehr aufwändig ist.

Eine mögliche visuelle Inspektion ist oftmals sehr schwierig, da Förderbänder aus Sicherheitsgründen und der Staubentwicklung vollkommen eingehaust sind. Drehende Tragrollen sind dadurch nicht mehr von außen einsehbar.

### Zusammenfassung der Erfindung

Die Aufgabe der vorliegenden Erfindung liegt darin eine einfache Möglichkeit der Überwachung von Bewegungen von Körpern zur Verfügung zu stellen.

Die Aufgabe wird durch die eingangs genannte Vorrichtung gelöst. Diese Vorrichtung weist eine Antenne, bevorzugt eine Kabelantenne, und einen Transponder, bevorzugt ein RFID Transponder, auf. Die Antenne ist so ausgeführt, dass diese den Transponder detektieren kann. Der Transponder oder die Antenne ist derart am Körper angebracht, dass während der Bewegung des Körpers sich eine Position von Transponder und Antenne zueinander verändert. Eine Kabelantenne ist beispielsweise ein Coax-Antennenkabel, welches als Antenne verwendet wird. Solche Kabelantennen sind beispielsweise als Wanderwellen RFID-Antennen bekannt. Der Lesebereich einer solchen Wanderwellen RFID Antenne reicht beispielsweise von einigen cm bis zu 2 m. Eine Auswerteeinrichtung ermittelt aufgrund vom Transpondersignal, welches von der Antenne empfangen wird, die Bewegung des Körpers.

Die Antenne muss also derart angeordnet sein, dass der Transponder von der Antenne - zumindest an einer Position - erfasst werden kann und die Auswerteeinrichtung, den jeweiligen Transponder eindeutig identifizieren kann. Die Antenne kann ortsfest angebracht werden oder sich auch bewegen, wobei während der Bewegung des Körpers eine Relativbewegung zwischen der Antenne und dem Transponder vorliegen muss. Die Relativbewegung zwischen Transponder und Antenne führt dazu, dass sich das von der Antenne empfangene Signal verändert. Im Zusammenhang mit dieser Erfindung wird unter der Veränderung der Position - von Transponder und Antenne zueinander - verstanden, dass zumindest ein Teilbereich des Transponders eine Positionsänderung gegenüber der Antenne ausführt. Das Signal muss sich also so verändern, dass anhand des veränderten Parameters auf eine Positionsänderung geschlossen werden kann. Mit beweglichem Körper werden - im Zusammenhang mit dieser Erfindung - alle Anlagenteile, Maschinenteile oder sonstige Objekte verstanden, welche eine Bewegung ausführen. Ein solcher beweglicher Körper kann beispielsweise ein rotationssymmetrischer Körper, welcher eine Drehbewegung ausführt oder ein Körper, welcher lineare Bewegungen ausführt, sein. Die Bewegung ist bevorzugt eine wiederkehrende Bewegung - der Körper erreicht immer wieder dieselbe Position. Besonders bevorzugt handelt es sich bei der Bewegung um eine periodische Bewegung - also eine Bewegung, die sich in regelmäßigen Abständen wiederholt. Der Transponder oder die Antenne wird an einer Stelle angebracht, die sich einerseits während der Bewegung des Körpers verändert und andererseits soll der Transponder oder die Antenne an dieser Stelle vor Zerstörung geschützt sein. Der Schutz des Transponders oder der Antenne kann beispielsweise durch eine Vertiefung sichergestellt werden. Die Auswerteeinrichtung kann aufgrund der Signale, welche von der Antenne empfangen werden eine Bewegung des Körpers detektieren. Im Zusammenhang mit der Erfindung wird unter Detektieren der Bewegung ganz allgemein verstanden, ob sich der Körper bewegt oder ob der Körper sich nicht - wie vorgesehen - bewegt. Dies kann sein, dass er gewisse Endlagen nicht erreicht oder diese Endlage erst nach einer längeren Zeit erreicht oder in seiner ursprünglichen Position verharrt. In einer bevorzugten Lösung können mehrere charakteristische Merkmale der Bewegung detektiert werden, besonders bevorzugt kann die Bewegung nahezu vollständig erfasst werden.

In einer bevorzugten Ausführungsform ist der Körper ein Rotationskörper. Der Transponder oder die Antenne ist exzentrisch an einer Stirnseite des Rotationskörpers oder umfangsseitig am Rotationskörper angebracht. Der Rotationskörper führt eine Drehbewegung um die Rotationsachse aus. Der Transponder oder die Antenne sind also exzentrisch gegenüber der Rotationsachse angeordnet. Diese Anordnung stellt sicher, dass bei Bewegung des Körpers zwischen Transponder und Antenne eine Relativbewegung stattfindet. Die Auswerteeinrichtung kann dadurch eine Bewegung detektieren. Das Anbringen des Transponders oder der Antenne an der Stirnseite hat den Vorteil das dieser - in Ausführungsformen, bei welchen die Stirnseite nicht im Eingriff mit anderen Körpern ist - ausreichend vor Zerstörung geschützt ist. Beim Anbringen an der Umfangsseite ist der Transponder oder die Antenne an einer Stelle, an der ebenfalls keine Berührung mit einem anderen Körper besteht oder in einer Vertiefung, angeordnet. Es sind aber auch andere Maßnahme denkbar, welche geeignet sind den Transponder oder die Antenne entsprechend zu schützen.

Eine vorteilhafte Ausführung sieht vor, dass der Transponder oder die Antenne derart am Körper positioniert ist, dass während der Bewegung des Körpers das von der Antenne empfangene Signal sich in seiner Signalstärke verändert und / oder es treten während der Bewegung des Körpers Positionen auf in welchen kein Signal empfangen wird. Durch die Betrachtung der Signalstärke kann sehr zuverlässig auf die Bewegung geschlossen werden. Bei Körpern für welche hauptsächlich das Vorhandensein irgendeiner Bewegung wichtig ist, hat sich auch die Methode Signal vorhanden und Signal nicht vorhanden als praktikabel erwiesen. Hierbei ist aber wichtig, dass während der Bewegung des Körpers immer jeweils eine Position auftritt, in welcher kein Signal empfangen wird und eine in welcher ein Signal empfangen wird.

Eine bevorzugte Ausführungsform sieht vor, dass die Anlage zumindest fünf bewegliche Körper aufweist. Die Körper weisen dabei jeweils einen Transponder oder eine Antenne auf. Die Auswerteeinrichtung kann die Bewegung der zumindest fünf Körper ermitteln. Die vorliegende Erfindung eignet sich besonders bei der Überwachung der Bewegung einer Vielzahl von Körpern. Bei der Überwachung von beispielsweise fünf beweglichen Körpern kann dies in vielen Fällen mit einer Antenne bewerkstelligt werden. Dadurch ergibt sich eine besonders kostengünstige Überwachung bei einer Vielzahl von beweglichen Körpern.

Eine vorteilhafte Ausführungsform sieht vor, dass durch die Auswerteeinrichtung zumindest ein charakteristischer Parameter der Bewegung, bevorzugt eine Geschwindigkeit, ein Erreichen einer Endposition und/oder eine Drehzahl, bestimmt werden kann. Die Auswerteeinrichtung ist so ausgestaltet, dass sie aufgrund des empfangenen Signals einen Rückschluss auf die Bewegung des Körpers machen kann. Dies kann beispielsweise dann der Fall sein, wenn es während der Bewegung Phasen gibt, in denen ein Transpondersignal empfangen wird und Phasen, in welchen keine Signal vom Transponder empfangen wird. Diese Information lässt einen Rückschluss auf eine Drehzahl zu - falls die Bewegung eine Rotationsbewegung ist. Dies kann auch bei Körpern, welche Linearbewegungen ausführen, in ähnlicher Weise erfolgen. Es ist auch denkbar, dass der Rückschluss auf einen Parameter der Bewegung aufgrund der Signalstärke erfolgt.

Eine zweckmäßige Ausführung sieht vor, dass die Antenne von einem nichtmetallischen Schlauch umhüllt wird. Dies hat den Vorteil, dass die Antenne einen Schutz aufweist. Ein weiterer Vorteil ergibt sich, wenn die Antenne im Wartungsfall demontiert werden soll. Hierzu ist es einfach erforderlich die Antenne herauszuziehen und durch eine Einzugsfeder kann diese danach wieder in den nichtmetallischen Schlauch eingezogen werden. Der Schlauch ist bevorzugt aus Kunststoff, Carbon oder Glasfaserrohren gefertigt. Besonders in Stranggusssegmenten sind die Anforderungen aufgrund von der Wärmestrahlung höher.

Eine besonders bevorzugte Ausführungsform sieht vor, dass der nichtmetallische Schlauch kühlendes Medium aufweist, bevorzugt weist der Schlauch einen Zufluss und einen Abfluss für kühlendes Medium auf. Bei Anwendungen in denen sehr hohe Temperaturen herrschen, wie beispielsweise bei einer Stranggussanlage soll die Antenne gekühlt werden. Dies geschieht besonders vorteilhaft dadurch, dass der nichtmetallische Schlauch mittels kühlendem Medium durchflossen ist. Der Schlauch also an dem einen Ende einen Eingang für das kühlende Medium und am anderen Ende einen Ausgang für dieses kühlende Medium aufweist. Als kühlendes Medium kommt beispielsweise Wasser zum Einsatz.

Eine weitere vorteilhafte Ausführung sieht vor, dass der Schlauch zumindest einen eigenen Kühlkanal aufweist, welcher entlang der Antenne angeordnet ist. Eine mögliche Ausführung ist, dass der Schlauch aus einem Doppelwandigen Schlauch besteht, wobei im Inneren die Antenne eingezogen ist und zwischen Außenwand und Innenwand der Kühlkanal angeordnet ist. Eine andere Ausführung sieht vor, dass eine Vielzahl von Kanälen in der Wand des Schlauches vorhanden sind oder im Schlauch um die Antenne mehrere Rohre angeordnet sind, welche von einem Kühlmedium durchströmt werden können.

Die erfindungsgemäße Aufgabe wird auch durch das eingangs genannte Verfahren gelöst, welches folgendes umfasst:
- eine Antenne, bevorzugt eine Kabelantenne, und ein Transponder, bevorzugt ein RFID Transponder, welcher von der Antenne detektiert werden kann, wobei die Antenne oder der Transponder am Körper angebracht sind,
- wobei die Antenne und der Transponder derart positioniert sind, dass sich während der Bewegung des Körpers eine Position von Transponder und Antenne verändert,
- eine Auswerteeinrichtung ist mit der Antenne verbunden und bestimmt aufgrund des von der Antenne erfassten Signals die Bewegung des Körpers.

Die Antenne und der Transponder müssen während der Bewegung des Körpers eine Relativbewegung ausführen. Dies ermöglicht es der Auswerteeinrichtung aufgrund des empfangenen Signals einen Rückschluss auf die Bewegung zu treffen. Die Überwachung der Bewegung ist im einfachsten Fall das Feststellen ob der Körper eine Bewegung ausführt. Die Auswerteeinrichtung bestimmt die Bewegung aufgrund eines oder mehrerer Parameter des Signales, wie bereits zuvor bei der Vorrichtung ausgeführt.

Eine zweckmäßige Ausführungsform sieht vor, dass der Transponder oder die Antenne derart am Körper positioniert sind, dass während der Bewegung des Körpers das von der Antenne empfangene Signal des Transponders sich in seiner Signalstärke verändert, oder es treten während der Bewegung des Körpers Positionen auf, in welchen kein Signal empfangen wird.

Durch die Betrachtung der Signalstärke kann sehr zuverlässig auf die Bewegung geschlossen werden. Bei Körpern für welche hauptsächlich das Vorhandensein irgendeiner Bewegung wichtig ist, hat sich auch die Methode Signal vorhanden und Signal nicht vorhanden als praktikabel erwiesen. Hierbei ist aber wichtig, dass sichergestellt ist, dass auch wirklich immer eine Position auftritt, in welcher die Antenne kein Signal empfangen kann.

Eine weitere vorteilhafte Ausführungsform sieht vor, dass die Anlage zumindest fünf bewegliche Körper aufweist, welche jeweils einen Transponder oder eine Antenne aufweisen, und die Auswerteeinrichtung die Bewegung der zumindest fünf Körper ermitteln kann. Die Anordnung von Antenne und Transponder eignet sich besonders gut zur Überwachung einer Vielzahl - also zumindest fünf - beweglicher Körper. Durch den Transponder kann der jeweils überwachte Körper eindeutig identifiziert werden, und zusätzlich kann das jeweilige Signal des Transponders zur Erfassung der Bewegung herangezogen werden. Dies erlaubt eine einfache und kostengünstige Überwachung der Bewegungen von einer Vielzahl von Körpern in einer Anlage.

Eine bevorzugte Ausführungsform sieht vor, dass von der Auswerteeinrichtung zumindest ein charakteristischer Parameter der Bewegung, bevorzugt eine Geschwindigkeit, ein Erreichen einer Endposition und/oder eine Drehzahl, bestimmt werden kann. Die Auswerteeinrichtung ist so ausgestaltet, dass sie aufgrund des empfangenen Signals einen Rückschluss auf die Bewegung des Körpers machen kann. Dies kann beispielsweise dann der Fall sein, wenn es während der Bewegung Phasen gibt, in denen ein Transpondersignal empfangen wird und Phasen, in welchen keine Signal vom Transponder empfangen wird. Diese Information lässt einen Rückschluss auf eine Drehzahl zu - falls die Bewegung eine Rotationsbewegung ist. Dies kann auch bei Körpern welche Linearbewegungen ausführen in ähnlicher Weise erfolgen. Es ist auch denkbar, dass der Rückschluss auf einen Parameter der Bewegung aufgrund der Signalstärke erfolgt.

Eine vorteilhafte Ausführung sieht vor, dass die Antenne von einem Kühlmedium gekühlt wird. Dies ist besonders bei Anwendungen in einer rauen und heißen Umgebung sehr wichtig. Die Antenne zu kühlen ist besonders beim Überwachen von rotierenden Rollen in Segmenten einer Strangussanlage wichtig, um die Funktionalität der Überwachung über einen längeren Zeitraum sicherzustellen.

Die Aufgabe wird durch die eingangs genannte Verwendung der Vorrichtung gelöst. Diese Vorrichtung eignet sich besonders für eine Stranggussanlage zum Überwachen der Bewegung von drehenden Rollen oder für eine Förderbandanlage zur Überwachung von Tragrollen. Für solche Anlagen eignet sich die beschriebene Vorrichtung besonders vorteilhaft, da in solchen Anlagen eine Vielzahl von bewegbaren Körpern vorhanden sind. Die Überwachung ist durch diese Vorrichtung besonders einfach und kostengünstig.

Die Aufgabe wird weiterhin durch ein Computerprogramm umfassend Befehle, die bewirken, dass die zuvor beschriebene Vorrichtung zur Überwachung von Anlagen die oben erläuterten Verfahrensschritte ausführt. Dieses Computerprogramm ist beispielsweise auf einem Computerlesbaren Medium gespeichert.

### Kurze Beschreibung der Zeichnungen

Fig. la und 1b zeigen eine schematische Darstellung der erfindungsgemäßen Vorrichtung.
Fig. 2 zeigt eine bevorzugte Ausführungsform der erfindungsgemäßen Vorrichtung.
Fig. 3 zeigt eine vorteilhafte Ausführungsform der erfindungsgemäßen Vorrichtung.
Fig. 4 zeigt eine Stranggussanlange mit der erfindungsgemäßen Vorrichtung.
Fig. 5a und Fig. 5b zeigt eine bevorzugte Anordnung von einem Transponder an einem beweglichen Körper.
Fig. 6 zeigt eine weitere vorteilhafte Ausführungsform der erfindungsgemäßen Vorrichtung.
Fig. 7a-7c zeigt ein vereinfachtes Signal, welches von einer Antenne empfangen wird.

### Beschreibung der Ausführungsformen

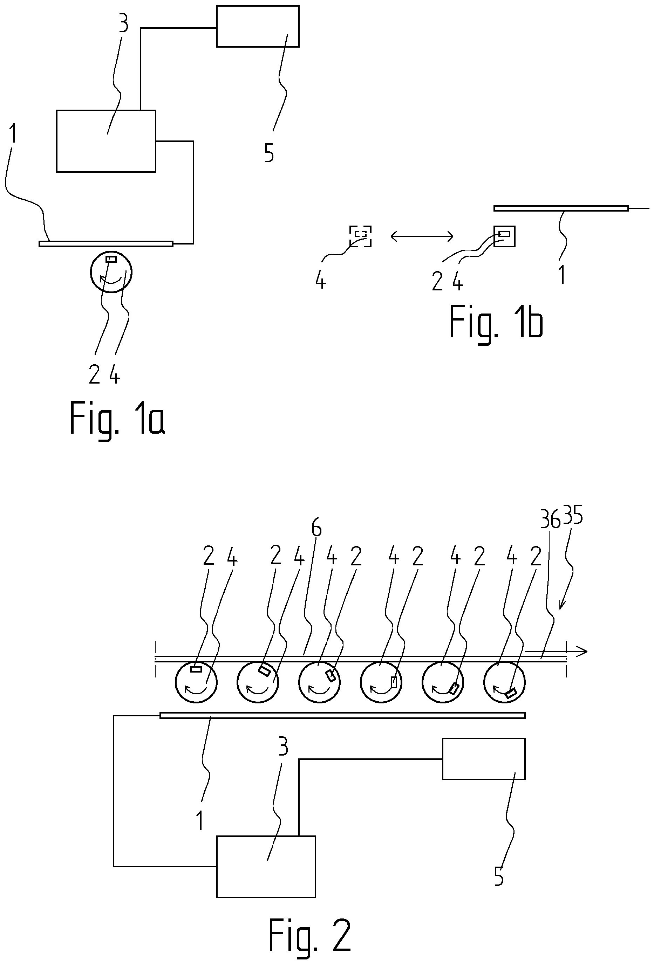

In Fig. 1a ist auf einem beweglichen Körper 4 ein Transponder 2 angeordnet. Eine Antenne 1 empfängt ein Signal des Transponders 2, welches von der Auswerteeinrichtung 3 empfangen und ausgewertet wird. Das Ergebnis wird an einem Anzeigegerät 5 angezeigt. Die Auswerteeinrichtung 3 kann das Ergebnis aber auch an ein übergeordnetes Leitsystem einer Industrieanlage übermitteln.

In Fig. 1b ist ein beweglicher Körper 4 mit einem Transponder 2 dargestellt, welcher eine lineare Bewegung ausführt. Der Körper 4 soll eine Endlage oder zumindest einen vordefinierten Bereich erreichen - dargestellt durch den Körper 4 mit durchgezogener Linie. Die Antenne 1 kann den Transponder 2 in dieser Endlage oder diesem Bereich detektieren. Der bewegliche Körper 4 bewegt sich also zwischen dem strichlierten Körper 4 und dem mit einer durchgezogenen Linie dargestellten Körper 4.

In Fig. 2 ist beispielhaft ein Abschnitt eines Förderbandes 35 dargestellt. Das Förderband 35 besteht aus einer Vielzahl von Körpern 4 - konkret sind dies Tragrollen - und einem Fördergurt 36. Diese Körper 4 führen eine ständige Rotationsbewegung aus. Wenn einer dieser Körper 4 feststeckt oder sich nicht mehr synchron mit der Geschwindigkeit des Traggurtes bewegt, führt dies zu einem höheren Verschleiß und zu einem erhöhten Energiebedarf. Um Körper 4, welche nicht mehr wie vorgesehen rotieren, zu detektieren werden diese mit einem Transponder 4 ausgestattet. Durch die ortsfeste Antenne 2 wird zumindest von jenen Körpern 2, welche eine Bewegung ausführen ein Signal empfangen. Dieses Signal wird von der Auswerteeinrichtung 3 empfangen und die Bewegung jedes Körpers 2 wird anhand der Transponderdaten ausgewertet. Diese Auswertung wird beispielsweise an ein Anzeigegerät 5 übermittelt. Bei Körpern 4 die keine Bewegung mehr ausführen wird ein konstantes Signal empfangen.

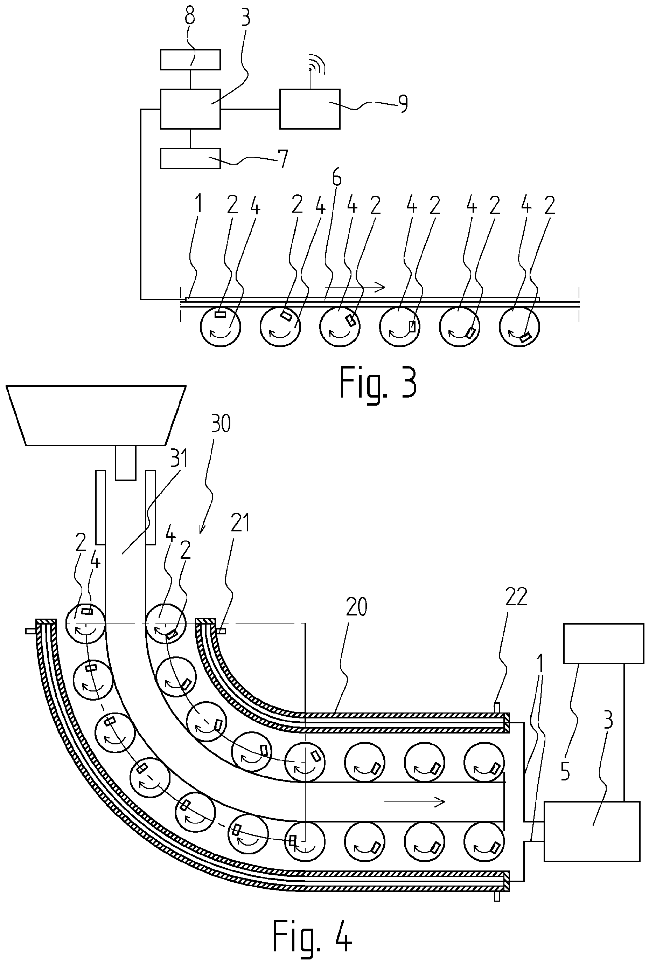

In Fig. 3 wird eine ähnliche Vorrichtung wie in Fig. 2 gezeigt. Diese unterscheidet sich dadurch, dass die Antenne direkt auf dem Traggurt 36 des Förderbandes 35 platziert ist - sich also ebenfalls bewegt. Die Antenne übermittelt die empfangenen Transponderdaten ebenfalls an die Auswerteeinrichtung 3, welche die ausgewerteten Daten an einen Speicher 7 übermittelt. Eine Batterie 8 sorgt für die Energieversorgung der Auswerteeinrichtung 3 und durch eine Schnittstelle 9 können die Daten kabellos an ein Leitsystem oder einen Server einer Industrieanlage übermittelt werden. Diese Ausführung kann besonders dann vorteilhaft sein, wenn man nur in bestimmten zeitlichen Phasen die Überprüfung durchführen möchte. Hierzu kann beispielsweise die Antenne, die Auswerteeinheit 3 inklusive Stromversorgung, beispielsweise in Form einer Batterie 8, und der Speicher 7 am Fördergurt platziert werden. Die Schnittstelle 9 kann optional für eine direkte Übermittlung der Daten an einen Server oder ein Leitsystem auf dem Fördergurt platziert werden. Diese Ausführung ermöglicht besonders bei sehr langen Förderstrecken eine einfache Überprüfung der bewegbaren Körpern 4. Durch diese Ausführung muss nicht die gesamte Förderstrecke mit einer bzw. einer Vielzahl von Antennen ausgestattet werden. Diese Überprüfung kann beispielsweise in Betriebspausen durchgeführt werden.

In Fig. 4 ist eine Stranggussanlage 30 dargestellt. Die Stranggussanlage hat eine Vielzahl an beweglichen Körpern 4 - konkret Tragrollen - welche mit einem gegossenen Strang 31 mitlaufen und dadurch eine Rotationsbewegung ausführen. Diese Körper 4 sind mit einem Transponder 2 ausgestattet. Eine Antenne 1 detektiert die Signale der Transponder 2. Der Strang 31 wird beidseitig von Tragrollen gestützt. An beiden Seiten sind Antennen 1 angeordnet. Diese Antennen 1 werden von einem Schlauch 20 umhüllt. Dieser Schlauch 20 ist vorteilhafter Weise von einem Kühlmedium durchflossen, welches durch einen Zufluss für Kühlmedium 21 eingebracht wird und durch einen Abfluss für Kühlmedium 22 wieder abgeführt wird. Die beiden Antennen 1 werden dann an eine Auswerteeinrichtung 3 angeschlossen, welche die Bewegung der einzelnen Körper 4 entsprechend auswerten kann.

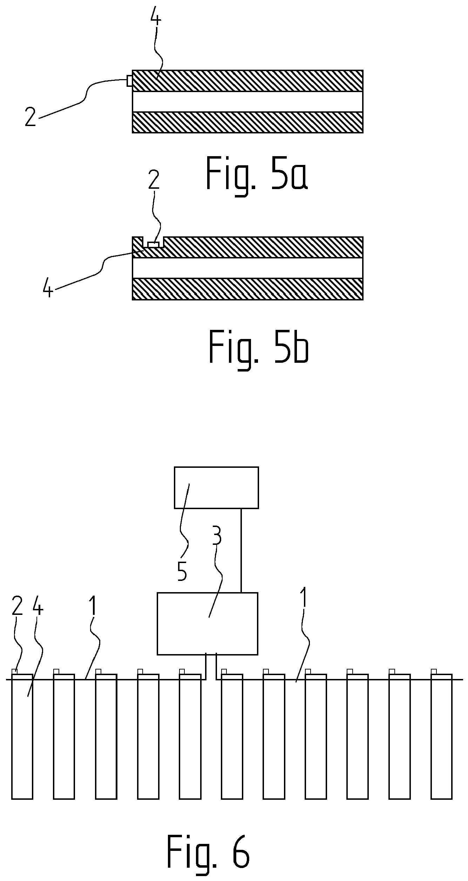

In der Fig. 5a ist ein Körper 4 in der Form einer rotationssymmetrischen Rolle dargestellt. Der Transponder ist vorteilhafterweise an der Stirnseite angebracht, da durch diese Anordnung die exzentrische Anordnung einfach ermöglicht wird. Ein weiterer Vorteil ist, dass auf der Stirnseite einer Rolle im Normalfall keine Kräfte einwirken, welche den Transponder 2 zerstören.

Eine andere Möglichkeit der Anordnung eines Transponders an einem rotationssymmetrischen Körper 4, dass der Transponder umfangseitig in einer Vertiefung angeordnet wird - wie in Fig. 5b dargestellt. Diese Art der Anordnung ergibt ebenfalls eine exzentrische Anordnung und ein entsprechender Schutz ist ebenfalls gewährleistet. Die Vertiefung kann auch zusätzlich noch mit einem Füllmaterial aufgefüllt werden welche eine Detektion des Transponders durch die Antenne nicht verhindert.

In der Fig. 6 ist eine Anordnung von sich drehenden Rollen - beispielsweise ein Rollgang - gezeigt. Bei dieser Anordnung sind zwei Antennen 1 vorhanden. Durch die Verwendung von zwei oder mehr Antennen ist es möglich einen größeren Bereich abzudecken. Die Antennen sind im Normalfall nur für einen bestimmten Längenbereich geeignet.

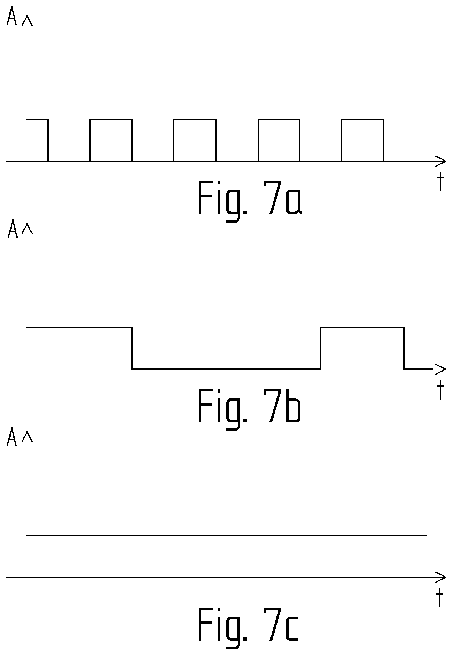

In den Figuren 7a - 7c werden noch beispielhaft Signale, welche von der Auswerteeinrichtung 3 empfangen werden dargestellt. Bei diesen Signalen handelt es sich um die Ausführung, dass es während der Bewegung der Körper 4 Positionen gibt, bei welchen ein Signal detektiert werden kann und Positionen an denen keine Detektion möglich ist. In der Fig. 7a ist dargestellt, dass sich der Körper wie gewünscht bewegt. In der Fig. 7b bewegt sich der Körper langsamer als gewünscht. Dieser Körper führt also die Bewegung nicht wie gewünscht aus, was durch die längeren Phasen von Transponder Signal erkannt bzw. nicht erkannt zu sehen ist. In der Fig. 7c wird ständig ein Signal detektiert, womit dieser Körper keine Bewegung oder nur eine sehr geringe Bewegung ausführt. Es ist auch denkbar, dass kein Signal erkannt wird - wodurch ebenfalls die Bewegung nicht wie gewünscht ausgeführt wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Antenne
- 2: Transponder
- 3: Auswerteeinrichtung
- 4: Körper
- 5: Anzeigegerät
- 6: Förderband
- 7: Speicher
- 8: Batterie
- 9: Schnittstelle
- 20: Schlauch
- 21: Zulauf für Kühlmedium
- 22: Ablauf für Kühlmedium
- 30: Stranggußanlage
- 31: Strang
- 35: Förderband
- 36: Fördergurt

## Patentansprüche

1. Vorrichtung zur Überwachung einer Anlage, bevorzugt eine Industrieanlage, wobei zumindest ein Körper (4) der Anlage eine Bewegung, bevorzugt eine sich wiederholende Bewegung, besonders bevorzugt eine periodische Bewegung, ausführt, umfassend:
- eine Antenne (1), bevorzugt eine Kabelantenne,
- einen Transponder (2), bevorzugt ein RFID Transponder, welcher von der Antenne (1) detektiert werden kann,
- wobei der Transponder (2) oder die Antenne (1) derart am Körper (4) angebracht ist, dass während der Bewegung des Körpers sich eine Position von Transponder (2) und Antenne (1) verändert,
- eine Auswerteeinrichtung (3), welche die Bewegung des Körpers (4), anhand von durch die Antenne (1) empfangenem Transpondersignal, ermittelt.

2. Vorrichtung zur Überwachung einer Anlage nach Anspruch 1, **dadurch gekennzeichnet, dass** der Körper (4) ein Rotationskörper ist und der Transponder (2) exzentrisch an einer Stirnseite des Rotationskörpers oder umfangsseitig am Rotationskörper angebracht ist.

3. Vorrichtung zur Überwachung einer Anlage nach Anspruch 1 - 2, **dadurch gekennzeichnet, dass** der Transponder (2) oder die Antenne (1) derart am Körper (4) positioniert ist, dass während der Bewegung des Körpers (4) das von der Antenne (1) empfangene Signal sich in seiner Signalstärke verändert und / oder es treten während der Bewegung des Körpers (4) Positionen auf in welchen kein Signal empfangen wird.

4. Vorrichtung zur Überwachung einer Anlage nach Anspruch 1 - 3, **dadurch gekennzeichnet, dass** die Anlage zumindest fünf bewegliche Körper (4) aufweist, welche jeweils einen Transponder (2) oder eine Antenne (1) aufweisen und die Auswerteeinrichtung (3) die Bewegung der zumindest fünf Körper (4) ermitteln kann.

5. Vorrichtung zur Überwachung einer Anlage nach Anspruch 1 - 4, **dadurch gekennzeichnet, dass** die Auswerteeinrichtung (3) zumindest einen charakteristischen Parameter der Bewegung des Körpers (4), bevorzugt eine Geschwindigkeit, ein Erreichen einer Endposition und/oder eine Drehzahl bestimmen kann.

6. Vorrichtung zur Überwachung einer Anlage nach Anspruch 1 - 5, **dadurch gekennzeichnet, dass** die Antenne (1) von einem nichtmetallischen Schlauch (20) umhüllt wird.

7. Vorrichtung zur Überwachung einer Anlage nach Anspruch 6, **dadurch gekennzeichnet, dass** der nichtmetallische Schlauch ein kühlendes Medium aufweist, bevorzugt weist der Schlauch (20) einen Zulauf (21) und einen Ablauf (22) für Kühlendes Medium auf.

8. Vorrichtung zur Überwachung einer Anlage nach Anspruch 6 oder 7, **dadurch gekennzeichnet, dass** der Schlauch (20) zumindest einen eigenen Kühlkanal aufweist, welcher entlang der Antenne angeordnet ist.

9. Verfahren zur Überwachung einer Anlage, bevorzugt einer Industrieanlage, wobei zumindest ein Körper (4) der Anlage eine Bewegung, bevorzugt eine sich wiederholende Bewegung, besonders bevorzugt eine periodische Bewegung ausführt, umfassend:
- eine Antenne (1), bevorzugt eine Kabelantenne, und ein Transponder (2), bevorzugt ein RFID Transponder, wobei die Antenne (1) oder der Transponder (2) am Körper (4) angebracht sind,
- wobei die Antenne (1) und der Transponder (2) derart positioniert sind, dass sich während der Bewegung des Körpers (4) eine Position von Transponder (2) und Antenne (1) verändert,
- eine Auswerteeinrichtung (3) ist mit der Antenne (1) verbunden und bestimmt aufgrund eines von der Antenne (1) erfassten Transpondersignals die Bewegung des Körpers.

10. Verfahren zur Überwachung einer Anlage nach Anspruch 9, **dadurch gekennzeichnet, dass** der Transponder (2) oder die Antenne (1) derart am Körper (4) positioniert sind, dass während der Bewegung des Körpers (4) das von der Antenne (1) empfangene Signal des Transponders (2) sich in seiner Signalstärke verändert oder es treten während der Bewegung des Körpers (4) Positionen auf in welchen kein Signal empfangen wird.

11. Verfahren zur Überwachung einer Anlage nach Anspruch 9 - 10, **dadurch gekennzeichnet, dass** die Anlage zumindest fünf bewegliche Körper (4) aufweist, welche jeweils einen Transponder (2) oder eine Antenne (1) aufweisen und die Auswerteeinrichtung (3) die Bewegung der zumindest fünf Körper (4) ermitteln kann.

12. Verfahren zur Überwachung einer Anlage nach Anspruch 9 - 11, **dadurch gekennzeichnet, dass** die Auswerteeinrichtung (3) zumindest einen charakteristischen Parameter der Bewegung, bevorzugt eine Geschwindigkeit, ein Erreichen einer Endposition und/oder eine Drehzahl bestimmen kann.

13. Verfahren zur Überwachung einer Anlage nach Anspruch 9 - 12, **dadurch gekennzeichnet, dass** die Antenne (1) von einem Kühlmedium gekühlt wird.

14. Verwendung der Vorrichtung nach den Ansprüchen 1-9 für eine Stranggussanlage zum Überwachen der Bewegung von drehenden Rollen oder für eine Förderbandanlage zur Überwachung von Tragrollen.

15. Computerprogramm umfassend Befehle, die bewirken, dass die Vorrichtung zur Überwachung einer Anlage nach Anspruch 1- 8 die Verfahrensschritte nach Anspruch 9-14 ausführen.
